# EUROPÄISCHE PATENTSCHRIFT

(11) **EP 2 882 985 B1**
(45) Veröffentlichungstag und Bekanntmachung des Hinweises auf die Patenterteilung: **03.07.2019**
(21) Anmeldenummer: 13735316.5
(22) Anmeldetag: 12.07.2013
(51) Int. Cl.: F16H 61/14, F16H 45/02

(54) **STEUERGERÄT, ANTRIEBSSTRANG, VERFAHREN UND PROGRAMM ZUM REDUZIEREN EINER GERÄUSCHENTWICKLUNG IN EINEM ANTRIEBSSTRANG UND/ODER ZUM ERHÖHEN EINER MASSENTRÄGHEIT BEI EINER LEERLAUFDREHZAHL**
CONTROL DEVICE, DRIVE TRAIN, METHOD AND PROGRAM FOR REDUCING NOISE DEVELOPMENT IN A DRIVE TRAIN AND/OR FOR INCREASING INERTIA IN AN IDLE SPEED
APPAREIL DE COMMANDE, CHAÎNE CINÉMATIQUE, PROCÉDÉ ET PROGRAMME DE RÉDUCTION DE LA PRODUCTION DE BRUITS DANS UNE CHAÎNE CINÉMATIQUE ET/OU D'AUGMENTATION DE L'INERTIE DE MASSE EN CAS DE RÉGIME DE RALENTI

(30) Priorität: 09.08.2012 DE 102012214128
(43) Veröffentlichungstag der Anmeldung: 17.06.2015
(73) Patentinhaber: ZF Friedrichshafen AG, 88046 Friedrichshafen (DE)
(72) Erfinder: WEBER, Christian, 36157 Ebersburg (DE); ROHM, Axel, 97453 Schonungen (DE)
(86) Internationale Anmeldenummer: PCT/EP2013/064748
(87) Internationale Veröffentlichungsnummer: WO 2014/023508

(56) Entgegenhaltungen:
- EP-A1- 2 280 195
- DE-A1- 19 804 227

## Beschreibung

Ein Ausführungsbeispiel bezieht sich auf ein Steuergerät für einen Antriebsstrang eines Fahrzeugs, einen Antriebsstrang für ein Fahrzeug sowie auf ein Verfahren zum Reduzieren einer Geräuschentwicklung in einem Antriebsstrang eines Fahrzeugs. Bei den Fahrzeugen kann es sich beispielsweise um ein Kraftfahrzeug handeln.

Im Bereich moderner Antriebsstränge von Fahrzeugen, insbesondere von Kraftfahrzeugen, werden zur Steigerung des Fahrkomforts zunehmend Tilgertorsionsdämpferanordnungen im Rahmen von Anfahrelementen eingesetzt. Diese dienen dazu, Torsionsschwingungen möglichst aus dem Antriebsstrang zu entfernen, die beispielsweise aufgrund eines Arbeitsprinzips eines Antriebsmotors auftreten können.

Nun kann es aufgrund des Einsatzes der Tilgertorsionsdämpferanordnungen jedoch gegebenenfalls zu einer Geräuschentwicklung aus dem Antriebsstrang kommen, den ein Fahrer des betreffenden Fahrzeugs als störend, gegebenenfalls sogar als einen Defekt des Fahrzeugs anzeigend empfinden könnte, obwohl das Fahrzeug einen solchen nicht aufweist. Auch im Hinblick auf eine Balance zwischen Komfort, sportlichem Ansprechverhalten des Antriebsmotors sowie ökonomischer und ökologischer Aspekte bietet der Einsatz von Tilgertorsionsdämpferanordnungen Raum zur Verbesserung.

Durch die DE 198 04 227 A1 beispielsweise ist ein Anfahrelement in Form eines hydrodynamischen Drehmomentwandlers bekannt, wobei parallel zu einem durch Pumpen-, Turbinen- und Leitrad gebildeten hydrodynamischen Kreis ein Kupplungselement in Form einer Überbrückungskupplung vorgesehen ist. Weiterhin ist eine Tilgertorsionsdämpferanordnung vorgesehen, die, da am Turbinenrad angebunden, sowohl bei ausgerückter, also offener Überbrückungskupplung, als auch bei eingerückter, also geschlossener Überbrückungskupplung wirksam ist. Während eine derartige Tilgertorsionsdämpferanordnung bei höheren Drehzahlen, bei welchen hinreichend große Fliehkräfte auf wenigstens eine Tilgermasse einwirken, einwandfrei wirksam ist, besteht bei sehr geringen Drehzahlen das Risiko, dass die Fliehkräfte die Gewichtskraft unterschreiten, und die wenigstens eine Tilgermasse infolge eines unkontrollierten Bewegungsablaufes unter Verursachung einer unerwünschten Geräuschentwicklung gegen ein anderes Bauteil anschlägt. Diese sehr geringen Drehzahlen liegen unterhalb der Leerlaufdrehzahl, und treten regelmäßig beim Abschalten des jeweiligen Antriebs auf.

Weiterhin ist die EP 2 280 195 A1 bekannt, die ein Verfahren zur Steuerung einer Wandlerüberbrückungskupplung eines Automatikgetriebes eines Kraftfahrzeugs beschreibt. Die DE 100 44 493 A1 bezieht sich auf eine Mehrfach-Kupplungseinrichtung, insbesondere eine Doppel-Kupplungseinrichtung für lastschaltbare Getriebe.

Ausgehend hiervon besteht ein Bedarf, einen Kompromiss zwischen Komfort, Ansprechverhalten sowie ökonomischer und ökologischer Aspekte eines Antriebsstrangs eines Fahrzeugs zu verbessern.

Diesem Bedarf tragen ein Steuergerät gemäß Patentanspruch 1, ein Antriebsstrang gemäß Patentanspruch 6 und ein Verfahren zum Reduzieren einer Geräuschentwicklung gemäß Patentanspruch 7 Rechnung.

Ein Steuergerät gemäß einem Ausführungsbeispiel für einen Antriebsstrang eines Fahrzeugs, beispielsweise eines Kraftfahrzeugs ist ausgebildet, um ein Kupplungselement anzusteuern, sodass das Kupplungselement eine Sekundärseite eines Anfahrelements abbremst, wenn das Steuergerät ein ein Abschalten eines Antriebsmotors anzeigendes Eingangssignal empfängt. Der Antriebsstrang des Fahrzeugs, beispielsweise eines Kraftfahrzeugs, umfasst hierbei einen Antriebsmotor, das Anfahrelement und das Kupplungselement, wobei das Anfahrelement eine Tilgertorsionsdämpferanordnung mit wenigstens einer Tilgermasse umfasst, wobei das Anfahrelement mit einer Primärseite mit dem Antriebsmotor und mit der Sekundärseite mit der Tilgertorsionsdämpferanordnung drehfest gekoppelt ist. Das Kupplungselement ist ferner ausgebildet, um die Sekundärseite durch ein Koppeln mit der Primärseite des Anfahrelements und/oder durch ein Koppeln mit einem bei einem Stillstand des Fahrzeugs stehenden Bezugsbauteil abzubremsen.

Hierdurch kann es möglich sein, dass das Steuergerät einer Geräuschentwicklung, die ihren Ursprung in der wenigstens einen Tilgermasse der Tilgertorsionsdämpferanordnung hat, dadurch entgegenwirken kann, dass diese durch das gezielte Koppeln mit der Primärseite oder dem Bezugsbauteil hinsichtlich ihrer Drehzahl angepasst bzw. abgebremst wird. Das Steuergerät nutzt hierbei das Eingangssignal, das das Abschalten des Antriebsmotors anzeigt.

Der Antriebsmotor kann beispielsweise ein Verbrennungsmotor, also beispielsweise ein Automotor, ein Dieselmotor oder auch ein Wankelmotor sein, der sowohl aufgeladen wie auch als Saugmotor ausgebildet sein kann. Ebenso kann es sich bei dem Antriebsmotor auch um einen Elektromotor oder einen anderen Motor handeln.

Das Anfahrelement kann beispielsweise ein hydrodynamisches Anfahrelement, also beispielsweise ein hydrodynamischer Drehmomentwandler, aber auch eine Reibkupplung oder auch eine Kombination derselben darstellen, wobei eine Reibkupplung auf der Schaffung einer reibschlüssigen Verbindung zwischen der Primärseite und der Sekundärseite beruht. So kann beispielsweise ein hydrodynamisches Anfahrelement mit einer Überbrückungskupplung auf Basis einer Reibkupplung implementiert werden. Optional kann es sich bei dem Anfahrelement über ein solches Element handeln, das ausgebildet ist, um stets bei einer Drehbewegung der Primärseite ein Schleppmoment auf die Sekundärseite zu übertragen.

Eine Tilgertorsionsdämpferanordnung umfasst wenigstens eine Tilgermasse, die durch wenigstens ein Führungsbauteil derart geführt und gelagert ist, sodass diese derart eine Schwingung ausführen kann, sodass durch die Schwingung der wenigstens einen Tilgermasse ein Schwingungsanteil einer der Tilgertorsionsdämpferanordnung aufgeprägten Drehbewegung teilweise oder vollständig kompensierbar ist.

Ein Steuergerät gemäß einem Ausführungsbeispiel kann optional beispielsweise besonders effizient dann eingesetzt werden, wenn der Antriebsstrang so ausgebildet ist, dass das Kupplungselement ein hydrodynamisches Anfahrelement umfasst, das ausgebildet ist, um eine Drehbewegung von der Primärseite zu der Sekundärseite zu übertragen. Bei einem solchen hydrodynamischen Anfahrelement kann es sich beispielsweise um den zuvor genannten hydrodynamischen Drehmomentwandler handeln. Das Kupplungselement kann in einem solchen Fall beispielsweise eine Überbrückungskupplung des hydrodynamischen Anfahrelements umfassen, das ausgebildet ist, um die Primärseite und die Sekundärseite miteinander über eine reibschlüssige Verbindung oder einen Reibkontakt zu koppeln. So kann ein Steuergerät gemäß einem Ausführungsbeispiel ein bereits im Antriebsstrang vorhandenes Kupplungselement nutzen, um einer Geräuschentwicklung der Tilgertorsionsdämpferanordnung entgegenzuwirken. Eine reibschlüssige Verbindung, die auch als kraftschlüssige Verbindung bezeichnet wird, basiert hierbei darauf, dass zwischen den miteinander entsprechend verbundenen Komponenten aufgrund einer Haftreibung und einer diese bewirkende Normalkraftkomponente die betreffenden Komponenten im Wesentlichen miteinander drehfest verbunden sind. Im Unterschied hierzu kann bei einem Reibkontakt gegebenenfalls auch ein Drehzahlunterschied, also Schlupf zwischen den miteinander in Reibkontakt stehenden Komponenten auftreten. Eine Kupplung mittels Reibkontakt umfasst so im Allgemeinen auch eine reibschlüssige Verbindung.

Darüber hinaus kann optional ein Steuergerät gemäß einem Ausführungsbeispiel auch dann besonders effizient eingesetzt werden, wenn der Antriebsstrang so ausgebildet ist, dass dieser ein automatisches Getriebe (Automatikgetriebe) umfasst, das über eine Getriebeeingangswelle mit der Sekundärseite des Anfahrelements gekoppelt ist, und das Bezugsbauteil umfasst. Das Kupplungselement umfasst hier ein Schaltelement, beispielsweise eine Lamellenkupplung oder eine Bandbremse, welches ausgebildet ist, um mit dem Bezugsbauteil, beispielsweise mit einer Welle des automatischen Getriebes oder einem Teil eines Gehäuses des automatischen Getriebes, eine reibschlüssige Verbindung oder einen Reibkontakt zu schaffen oder zu verstärken. Auch hierdurch kann ein Steuergerät gemäß einem Ausführungsbeispiel schon dadurch besonders effizient eingesetzt werden, dass dieses ein bereits in dem Antriebsstrang umfasstes Kupplungselement verwendet.

Optional kann bei einem Steuergerät gemäß einem Ausführungsbeispiel das Eingangssignal ein, beispielsweise von einem Fahrer des Fahrzeugs ausgelöstes, Ausschalten des Antriebsmotors und/oder ein Absinken einer Drehzahl einer Welle des Antriebsstrangs, beispielsweise einer Ausgangswelle des Antriebsmotors oder einer Eingangswelle des Anfahrelements, unter eine vorbestimmte Grenzdrehzahl darstellen. Die vorbestimmte Grenzdrehzahl beträgt oder entspricht hierbei höchstens 90 % einer Leerlaufdrehzahl des Antriebsmotors, wobei gegebenenfalls implementierte Unter- oder Übersetzungen berücksichtigt werden können. Bei anderen Ausführungsbeispielen kann die vorbestimmte Grenzdrehzahl auch niedriger liegen, beispielsweise bei höchstens 80 %, bei höchstens 60 %, bei höchstens 50 % oder bei höchstens 30 % der Leerlaufdrehzahl des Antriebsmotors. Das Eingangssignal des Fahrzeugs kann beispielsweise von einem Bedienelement zur Steuerung des Antriebsmotors durch den Fahrer ausgelöst werden. Hierbei kann es sich beispielsweise um einen Zündschlüssel oder auch einen Taster oder eine andere Schaltfläche handeln, mit der der Fahrer durch ein Bedienen derselben seinen Abschaltwunsch hinsichtlich des Antriebsmotors abgibt.

Optional kann ein Steuergerät gemäß einem Ausführungsbeispiel ferner ausgebildet sein, um die Sekundärseite nur dann auf das Eingangssignal hin abzubremsen, wenn ferner eine weitere Bedingung erfüllt ist, beispielsweise, wenn der Antriebsstrang ein automatisches Getriebe umfasst, wobei die weitere Bedingung beispielsweise dann erfüllt ist, wenn ein weiteres Eingangssignal eine antriebslose Einstellung des automatischen Getriebes anzeigt. Hierdurch kann es möglich sein, eine Fehlbedienung durch den Fahrer und/oder eine Betriebssicherheit des Steuergeräts und des Antriebsstrangs mit seinen Komponenten zu erhöhen. So kann das weitere Eingangssignal beispielsweise von dem Fahrer über ein Bedienelement für eine Fahrstufenauswahl des automatischen Getriebes bereitgestellt oder erzeugt werden, wobei eine antriebslose Einstellung oder Fahrstufenauswahl des automatischen Getriebes beispielsweise eine Parkstellung (P) oder eine Leerlaufstellung bzw. Neutralstellung (N) umfassen kann. Ergänzend oder alternativ hierzu kann eine Drehmomentübertragung durch das Getriebe in einer antriebslosen Einstellung ohnehin unterbrochen sein, sodass ein Ansteuern des Kupplungselements ohne großen Aufwand möglich ist.

Ein Ausführungsbeispiel umfasst ferner einen Antriebsstrang für ein Fahrzeug, beispielsweise ein Kraftfahrzeug, welches einen zuvor beschriebenen Antriebsmotor, ein entsprechendes Anfahrelement, ein Kupplungselement und ein Steuergerät gemäß einem Ausführungsbeispiel umfasst. Ausführungsbeispiele stellen ferner entsprechende Verfahren zum Reduzieren einer Geräuschentwicklung in einem Antriebsstrang eines Fahrzeugs dar, der die zuvor beschriebenen Komponenten umfasst. Ein solches Verfahren umfasst ein Empfangen eines Eingangssignals sowie ein Ansteuern des Kupplungselements, sodass das Kupplungselement die Sekundärseite abbremst, wenn das Eingangssignal ein Abschalten des Antriebsmotors anzeigt. Ebenso umfasst ein Ausführungsbeispiel ein entsprechendes Programm mit einem Programmcode zum Durchführen eines Verfahrens gemäß einem Ausführungsbeispiel, wenn das Programm auf einer programmierbaren Hardwarekomponente, also beispielsweise einem Prozessor, einem anwendungsspezifischen integrierten Schaltkreis (ASIC), einem System auf einem Chip (SOC), einem Steuergerät oder einer anderen vergleichbaren Komponente abläuft.

Nachfolgend werden unter Bezugnahme auf die beigefügten Figuren Ausführungsbeispiele näher beschrieben und erläutert.
- Fig. 1: zeigt ein schematisches Blockschaltbild eines Antriebsstrangs gemäß einem Ausführungsbeispiel eines Fahrzeugs;
- Fig. 2: zeigt eine Querschnittsdarstellung durch ein Anfahrelement mit einem Kupplungselement in Form eines hydrodynamischen Drehmomentwandlers;
- Fig. 3: zeigt eine perspektivische Darstellung einer Tilgertorsionsdämpferanordnung;
- Fig. 4: zeigt eine Gegenüberstellung eines zeitlichen Verlaufs einer Drehzahl des Antriebsmotors, von an einem Getriebelager auftretenden Vibrationen und Informationssignalen hinsichtlich Drehzahlen des Antriebsmotors und einer Ausgangswelle des Anfahrelements; und
- Fig. 5: zeigt ein Flussdiagramm eines Verfahrens zum Reduzieren einer Geräuschentwicklung in einem Antriebsstrang eines Fahrzeugs.

Bei der nachfolgenden Beschreibung der beigefügten Darstellungen bezeichnen gleiche Bezugszeichen gleiche oder vergleichbare Komponenten. Ferner werden zusammenfassende Bezugszeichen für Komponenten und Objekte verwendet, die mehrfach in einem Ausführungsbeispiel oder in einer Darstellung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

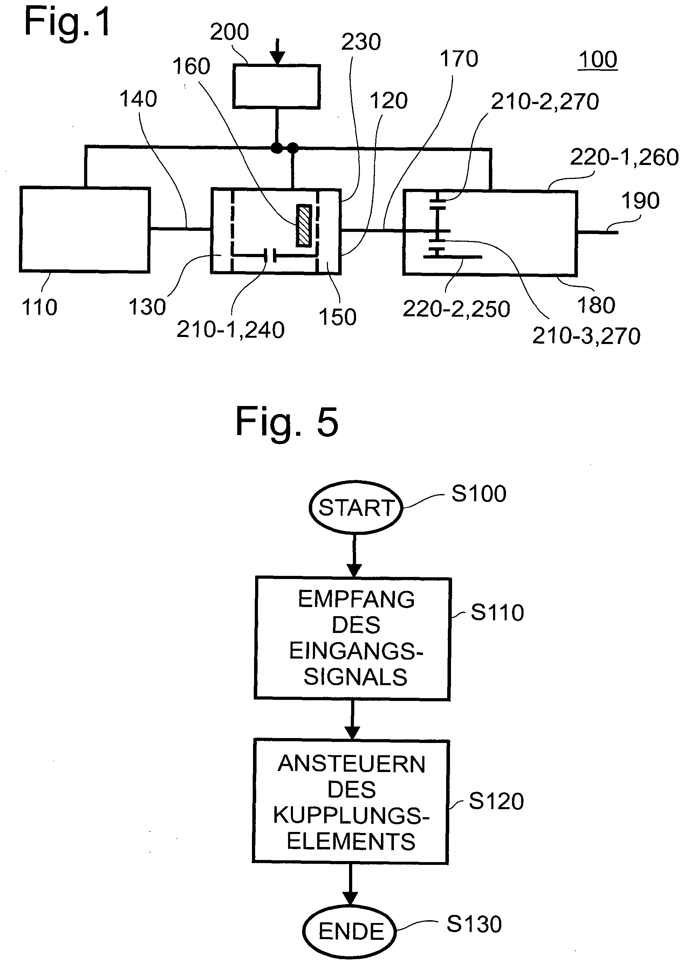

Fig. 1 zeigt ein schematisches Blockschaltbild eines Antriebsstrangs 100 gemäß einem Ausführungsbeispiel eines Fahrzeugs, beispielsweise eines Kraftfahrzeugs. Bei einem solchen Kraftfahrzeug kann es sich beispielsweise um einen Personenkraftwagen, einen Lastkraftwagen oder auch ein anderes Nutzkraftfahrzeug handeln, welches einen entsprechenden Antriebsstrang 100 umfasst.

Der Antriebsstrang 100 umfasst einen Antriebsmotor 110, bei dem es sich beispielsweise um einen Elektromotor, jedoch auch um einen Verbrennungsmotor, also beispielsweise einen Ottomotor, einen Dieselmotor oder einen Wankelmotor handeln kann. Dieser kann sowohl mittels Turboaufladung, jedoch auch mittels anderer Aufladungstechniken, beispielsweise mittels einer mechanischen Aufladung, jedoch auch als Saugmotor ausgeführt sein. Der Antriebsstrang 100 umfasst ferner ein Anfahrelement 120, das mit einer Primärseite 130 an einer Ausgangswelle 140 des Antriebsmotors 110 gekoppelt ist. Das Anfahrelement 120 umfasst ferner eine Sekundärseite 150, die mit einer Tilgertorsionsdämpferanordnung 160 und einer Eingangswelle 170 eines Getriebes 180 gekoppelt ist. Das Getriebe 180 kann hierbei beispielsweise als automatisches Getriebe ausgestaltet sein, die auch als Automatikgetriebe bezeichnet werden.

Ein automatisches Getriebe unterscheidet sich hierbei von einem Handschaltgetriebe durch seine Betätigung. Im Falle eines Stufengetriebes erfolgt bei einem automatischen Getriebe die Ansteuerung über ein Steuergerät, das beispielsweise elektrische oder auch hydraulische Steuersignale an entsprechende Aktuatoren und Schaltelemente des Getriebes 180 abgibt, während bei Handschaltgetrieben eine im Wesentlichen direkte mechanische oder hydraulische Anbindung eines entsprechenden Bedienelements des Fahrers zum Wechsel der Fahrstufe implementiert ist. So zählen auch Doppelkupplungsgetriebe und Getriebe, bei denen eine Betätigung der Gänge bzw. ein Wechsel der Fahrstufen über elektrische, hydraulische oder andere nicht unmittelbar von einem Fahrer auf mechanischem oder hydraulischem Wege übermittelte Signale als automatische Getriebe im Rahmen der vorliegenden Beschreibung. Ein automatisches Getriebe stellt so ein Getriebe 180 dar, bei dem Steuersignale zum Wechseln der Fahrstufe bzw. der Gänge durch ein Steuergerät erfolgen. Nachfolgend werden ohne Beschränkung der Allgemeinheit im Wesentlichen ausschließlich automatische Getriebe 180 betrachtet. Ausführungsbeispiele können jedoch gegebenenfalls auch im Zusammenhang mit anderen Getrieben eingesetzt werden.

Das Getriebe 180 weist ferner eine Ausgangswelle 190 auf, über die ein von dem Antriebsmotor 110 über das Anfahrelement 120 auf die Eingangswelle 170 übertragenes Drehmoment weiterleitbar ist, wenn sich das Getriebe 180 nicht in einer antriebslosen Einstellung oder in einem antriebslosen Betriebszustand befindet. Im Falle eines automatischen Getriebes kann es sich bei einem entsprechenden antriebslosen Betriebszustand beispielsweise um eine Parkposition bzw. Parkstellung (P) oder auch um eine Leerlaufstellung bzw. Neutralstellung (N) handeln. Häufig wird bei einem automatischen Getriebe 180 die Parkstellung dadurch implementiert, dass die Ausgangswelle 190 des Getriebes 180 mechanisch verriegelt wird. Im Unterschied hierzu ist in der Leerlaufstellung bzw. Neutralstellung des automatischen Getriebes 180 aufgrund einer Ansteuerung wenigstens eines Schaltelements, einiger Schaltelemente oder aller Schaltelemente des Getriebes 180 eine Übertragung des Drehmoments von der Eingangswelle 170 auf die Ausgangswelle 190 des Getriebes 180 unterbunden oder unterbrochen.

Der Antriebsstrang 100 in Fig. 1 weist ferner ein Steuergerät 200 auf, welches im vorliegenden Ausführungsbeispiel sowohl mit dem Antriebsmodul 110, dem Anfahrelement 120 und dem Getriebe 180 derart verbunden ist, sodass das Steuergerät 200 an die betreffenden Komponenten Steuersignale abgeben bzw. von diesen Informationssignale empfangen kann.

Darüber hinaus umfasst der Antriebsstrang 100 wenigstens ein Kupplungselement 210, welches ausgebildet ist, um die Sekundärseite 150 des Anfahrelements 120 mit einer anderen Komponente des Antriebsstrangs 100 oder seiner Peripherie, einem Bezugsbauteil 220, zu koppeln, um eine Drehzahl der Sekundärseite 150 und damit mit der mit dieser verbundenen Tilgertorsionsdämpferanordnung 160 zu verändern. Genauer gesagt umfasst der in Fig. 1 gezeigte Antriebsstrang 100 drei Kupplungselemente 210-1, 210-2, 210-3. Den Kupplungselementen 210 ist hierbei gemein, dass diese derart ausgebildet sind, um die Sekundärseite 150 des Anfahrelements 120 durch ein Koppeln mit der Primärseite 130 des Anfahrelements 120 und/oder durch ein Koppeln mit einem bei einem Stillstand des Fahrzeugs stehenden Bezugsbauteil 220 abzubremsen.

Das Steuergerät 200 ist nun derart ausgebildet, um das Kupplungselement 210 derart anzusteuern, sodass dieses die Sekundärseite 150 des Anfahrelements 120 abbremst, wenn das Steuergerät 201 ein Abschalten des Antriebsmotors 110 anzeigendes Eingangssignal empfängt. Dies ist in Fig. 1 durch einen in das Steuergerät 200 mündenden Pfeil schematisch vereinfacht gezeigt, wobei das betreffende Eingangssignal auch über eine Signalleitung bzw. einen Signalbus dem Steuergerät 200 zur Verfügung gestellt werden kann, über den bzw. über die das Steuergerät 200 auf die anderen in Fig. 1 gezeigten Komponenten anzusteuern vermag.

Wie bereits erwähnt wurde, zeigt Fig. 1 hierbei drei unterschiedliche Kupplungselemente 210-1, 210-2 und 210-3. Bei einem Ausführungsbeispiel eines Antriebsstrangs 100 bzw. eines Steuergeräts 200 ist hierbei eine Implementierung mehr als eines Kupplungselements 210 - sofern dieses überhaupt implementiert werden muss - nicht notwendig. Selbstverständlich können auch mehr als ein, zwei oder drei Kupplungselemente bei anderen Ausführungsbeispielen implementiert werden. Je nach konkreter Ausgestaltung handelt es sich also bei den Kupplungselementen 210 bzw. ihrer Anzahl, Anordnung und Ausgestaltung um optionale Aspekte.

Handelt es sich bei dem Anfahrelement 120 beispielsweise um ein hydrodynamisches Anfahrelement 230, also beispielsweise einen hydrodynamischen Drehmomentwandler, der ausgebildet ist, um eine Drehbewegung von der Primärseite 130 zu der Sekundärseite 150 zu übertragen. In einem solchen Fall das Kupplungselement 210-1 als Überbrückungskupplung 240 des hydrodynamischen Anfahrelements 240 umfassen, das ausgebildet ist, um die Primärseite 130 und die Sekundärseite 150 miteinander über eine reibschlüssige Verbindung oder zumindest einen Reibkontakt zu koppeln. Die Überbrückungskupplung 240 wird auch als Wandlerkupplung bezeichnet. Bei einem Reibkontakt kann im Gegensatz zu einer reibschlüssigen Verbindung gegebenenfalls auch ein Drehzahlunterschied, also Schlupf, auftreten.

Ergänzend oder alternativ zu der Implementierung des Kupplungselements 210-1 als Überbrückungskupplung 240 kann ein Kupplungselement 210 auch im Rahmen des Getriebes 180 implementiert werden, wenn es sich beispielsweise bei diesem um ein automatisches Getriebe handelt. Bei einem automatischen Getriebe erfolgt die Fahrstufen- bzw. Gangwahl dadurch, dass das automatische Getriebe 180 von einem Steuergerät, also beispielsweise auf dem Steuergerät 200 gemäß einem Ausführungsbeispiel entsprechend angesteuert wird. Es unterscheidet sich somit insbesondere von handgeschalteten Getrieben dadurch, dass bei einem automatischen Getriebe gerade keine mechanische Verbindung zwischen einem Bedienelement zur Fahrstufenauswahl und dem eigentlichen Getriebe besteht. Zu den automatischen Getrieben zählen so unter anderem neben klassischen Stufenautomatikgetrieben auch solche, bei denen eine Gangwahl über elektronische Steuerimpulse erfolgt, also beispielsweise Doppelkupplungsgetriebe oder auch andere elektrisch geschaltete Getriebe.

In einem solchen Fall kann das Kupplungselement 210 auch eine Kopplung der Sekundärseite 150 gegenüber einem bei einem Stillstand des Fahrzeugs stehenden Bezugsbauteil 220 bewirken. So kann es sich bei den Bezugsbauteilen 220 beispielsweise um eine Welle 250 des Getriebes 180 (Kupplungselement 210-3) oder auch um einen Teil eines Gehäuses 260 des Getriebes 180 handeln (Bezugsbauteil 220-1, Kupplungselement 210-2). In einem solchen Fall handelt es sich bei den beteiligten Kupplungselementen 210-2, 210-3 typischerweise um Schaltelemente 270 des Getriebes 180, beispielsweise also um Lamellenkupplungen oder auch Bandbremsen desselben, die häufig ohnehin vorgesehen sind und daher eine Implementierung eines Ausführungsbeispiels mit nur einem geringen zusätzlichen Aufwand möglich sein kann. Auch diese sind so ausgebildet, um mit den betreffenden Bezugsbauteilen 220 eine reibschlüssige Verbindung oder einen Reibkontakt zu schaffen oder zu verstärken.

Das Eingangssignal, welches das Steuergerät 200 empfängt und welches ein Abschalten des Antriebsmotors anzeigt, kann beispielsweise ein Ausschalten des Antriebsmotors 110 anzeigen. Ein solches Ausschalten des Antriebsmotors 110 kann der Fahrer beispielsweise über ein Bedienelement zur Steuerung des Antriebsmotors 110, also beispielsweise einen Zündschlüssel, einen Schalter, Taster oder ein anderes Bedienelement bewirken. Gegebenenfalls kann es sich jedoch auch um ein ein Ausschalten des Antriebsmotors 110 anzeigendes Signal handeln, welches nicht von dem Fahrer, sondern gegebenenfalls von dem Steuergerät 200 selbst oder einem anderen Steuergerät des Fahrzeugs initiiert wurde.

Alternativ oder ergänzend kann das Eingangssignal für das Steuergerät auch ein Absenken einer Drehzahl einer der Wellen des Antriebsstrangs 100 unter eine vorbestimmte Grenzdrehzahl anzeigen, wobei die vorbestimmte Grenzdrehzahl höchstens 90 % einer Leerlaufdrehzahl des Antriebsmotors 110 entspricht. Bei den entsprechenden Wellen des Antriebsstrangs 100 kann es sich beispielsweise um die Ausgangswelle 140 des Antriebsmotors 110 oder auch eine entsprechende Eingangswelle des Anfahrelements 120 handeln. Gegebenenfalls kann die betreffende Welle auch hinter einer eine Untersetzung oder Übersetzung bewirkenden Baugruppe, also beispielsweise hinter dem Getriebe 180 angeordnet sein. In einem solchen Fall ist die betreffende Unter- oder Übersetzung gegebenenfalls zu berücksichtigen.

Selbstverständlich können, beispielsweise um eine Wahrscheinlichkeit für eine Fehlauslösung zu reduzieren, auch andere vorbestimmte Grenzdrehzahlen verwendet werden, die beispielsweise höchstens 80 %, höchstens 60 %, höchstens 50 % oder höchstens 30 % der Leerlaufdrehzahl des Antriebsmotors 110 entsprechen.

Ergänzend kann hierzu das Steuergerät 200 auch so ausgebildet sein, dass dieses die Sekundärseite 150 nur dann auf das Eingangssignal hin abbremst, wenn ferner eine weitere Bedingung erfüllt ist. Die weitere Bedingung kann beispielsweise dann erfüllt sein, wenn ein weiteres Eingangssignal eine antriebslose Einstellung des automatischen Getriebes 180 anzeigt. Anders ausgedrückt kann das Steuergerät 200 das Abbremsen der Sekundärseite 150 gegebenenfalls nur dann initiieren, wenn das Getriebe 180 beispielsweise in seiner Parkstellung (P) oder seiner Neutralstellung (N) ist.

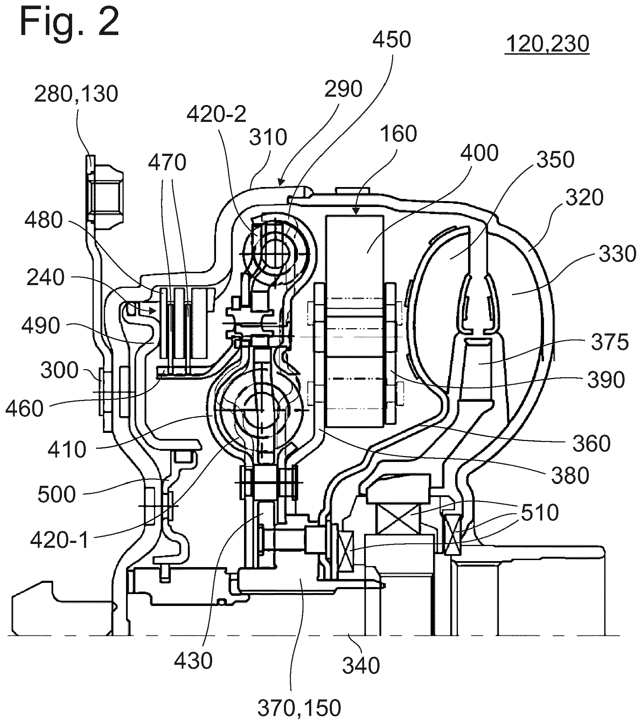

Fig. 2 zeigt eine Querschnittsdarstellung durch ein Anfahrelement 120, bei dem es sich genauer gesagt um ein hydrodynamisches Anfahrelement 230 in Form eines hydrodynamischen Drehmomentwandlers handelt. Die Primärseite 130 umfasst hier ein elastisches Verbindungselement 280, welches zur mechanischen Anbindung des Anfahrelements 120 an den in Fig. 2 nicht gezeigten Antriebsmotor 110 dient. Das elastische Verbindungselement 280 ist hierbei derart ausgebildet, sodass dieses mit der ebenfalls in Fig. 2 nicht gezeigten Ausgangswelle 140 des Antriebsmotors 110 verschraubbar oder anderweitig befestigbar ist, jedoch einen Ausgleich von Taumelschwingungen und anderen Bewegungen bis zu einem bestimmten Grad ermöglicht. Ebenso kann hierdurch gegebenenfalls eine Überbrückung eines axialen Raums ermöglicht werden, der sich beispielsweise aus unterschiedlichen Antriebsmotoren 110 im Rahmen einer Serie oder Modellreihe von Fahrzeugen ergeben kann. Das elastische Verbindungselement 280 ist hierbei mit einem Gehäuse 290 des hydrodynamischen Anfahrelements 230 über eine Nietverbindung 300 gekoppelt. Das Gehäuse 290 dient hierbei ebenfalls als Primärseite des Anfahrelements 120. So weist das Gehäuse 290 eine erste Gehäuseschale 310 und eine mit dieser verschweißten zweiten Gehäuseschale 320 auf, wobei an einer dem Antriebsmotor 110 abgewandten Seite des Gehäuses 290 die zweite Gehäuseschale 320 eine Mehrzahl von Pumpenschaufeln 330 aufweist, die derart ausgebildet und angeordnet sind, sodass diese einen Fluidstrom, beispielsweise einen Ölstrom, im Inneren des Gehäuses 290 im Falle einer Bewegung desselben um eine Drehachse 340 des Anfahrelements 120 bewirkt. Der so bewirkte Fluidstrom wird auf eine Mehrzahl von Turbinenschaufeln 350 geleitet, die über ein entsprechendes Haltebauteil 360 mit einer Abtriebsnabe 370 verbunden ist, die im vorliegenden Fall die Sekundärseite 150 des Anfahrelements 120 darstellt. Über ein Leitrad 375 wird der Fluidstrom zu den Pumpenschaufeln 330 zurückgeführt, wobei das Leitrad 375 über eine Sperrklinken- oder Ratschenführung nur in eine Drehrichtung drehbar gelagert ist.

Mit der Abtriebsnabe 370, also der Sekundärseite 150 ist ferner die Tilgertorsionsdämpferanordnung 160 mechanisch im Wesentlichen drehfest verbunden. Die Tilgertorsionsdämpferanordnung 160 weist hierbei ein erstes Führungsbauteil 380 und ein zweites Führungsbauteil 390 auf, die sich im Wesentlichen parallel zueinander erstrecken und zwischen denen wenigstens eine Tilgermasse 400, die auch als Tilger oder Fliehgewicht bezeichnet wird, derart beweglich angeordnet ist, sodass die wenigstens eine Tilgermasse 400 durch eine Drehbewegung bzw. einer Komponente der Drehbewegung um die Drehachse 340 herum derart in Schwingungen angeregt werden kann, sodass durch diese eine oder mehrere Schwingungskomponenten gedämpft bzw. ausgelöscht werden können.

Darüber hinaus ist mit der Sekundärseite 150, also der Abtriebsnabe 370 im hier gezeigten Anfahrelement 120 ein zweistufiger Torsionsdämpfer 410 angeordnet, der eine erste und eine zweite Federanordnung 420-1, 420-2 aufweist. Die beiden Federanordnungen 420 sind hierbei bezüglich eines in diese eingeleiteten Drehmoments in Serie zu der Abtriebsnabe 370, also der Sekundärseite 150 geschaltet. Zu diesem Zweck weist der Torsionsdämpfer 410 eine untere Nabenscheibe 430 auf, die mit den Federelementen der Federanordnung 420-1 in Anlage steht und mit der Abtriebsnabe 370 drehfest verbunden ist. Die Federelemente der Federanordnung 420-1 stehen darüber hinaus mit einer oberen Nabenscheibe 440 in Anlage, die ebenso mit den Federelementen der anderen Federanordnung 420-2 in Anlage steht. Über die Abdeckbleche 450, mit denen die Federelemente der Federanordnung 420-2 ebenso in Anlage stehen und einen mit den Abdeckblechen 450 mechanisch drehfest verbundenen Innenlamellenträger 460 kann so ein Drehmoment in den Torsionsdämpfer 410 eingeleitet werden.

Das Anfahrelement 120 umfasst ferner eine Überbrückungskupplung 240. Diese wird im vorliegenden Fall durch eine Mehrzahl von Innenlamellen 470 und Außenlamellen 480 gebildet, die einerseits mit dem Innenlamellenträger 460 und andererseits mit der ersten Gehäuseschale 310 im Eingriff stehen. Hierdurch kann von der Primärseite 130 über das elastische Verbindungselement 280 und die erste Gehäuseschale 310 das Drehmoment bzw. die Drehbewegung über die Außenlamellen 480 auf die Innenlamellen 470 und weiter über den Innenlamellenträger 460 zu dem Torsionsdämpfer 410 und damit der Abtriebsnabe 370 und der Sekundärseite 150 übertragen werden.

Die Innenlamellen 470 und die Außenlamellen 480 bilden hierbei eine Reibkupplung, bei der die zu dem Schaffen der reibschlüssigen Verbindung bzw. dem Schaffen des Reibkontaktes notwendige Normalkraftkomponente durch einen Kolben 490 bewirkt wird, der über eine mit der ersten Gehäuseschale 310 vernietete Trennwand 500 und entsprechende Dichtungen geführt und abgedichtet wird. Die Trennwand 500 und der Kolben 490 trennen so einen Druckraum ab, der zur Schaffung der reibschlüssigen Verbindung bzw. des Reibkontakts mit einem entsprechenden Druck beaufschlagt werden kann.

Lediglich der Vollständigkeit halber sei an dieser Stelle noch erwähnt, dass die gegeneinander drehenden Teile über entsprechende Lager 510 geführt und gelagert sind. Bei der hier gezeigten Implementierung bilden so der Torsionsdämpfer 410 und die Tilgertorsionsdämpferanordnung 160 eine mit der Sekundärseite 150 drehfest gekoppelte Zwischenmasse.

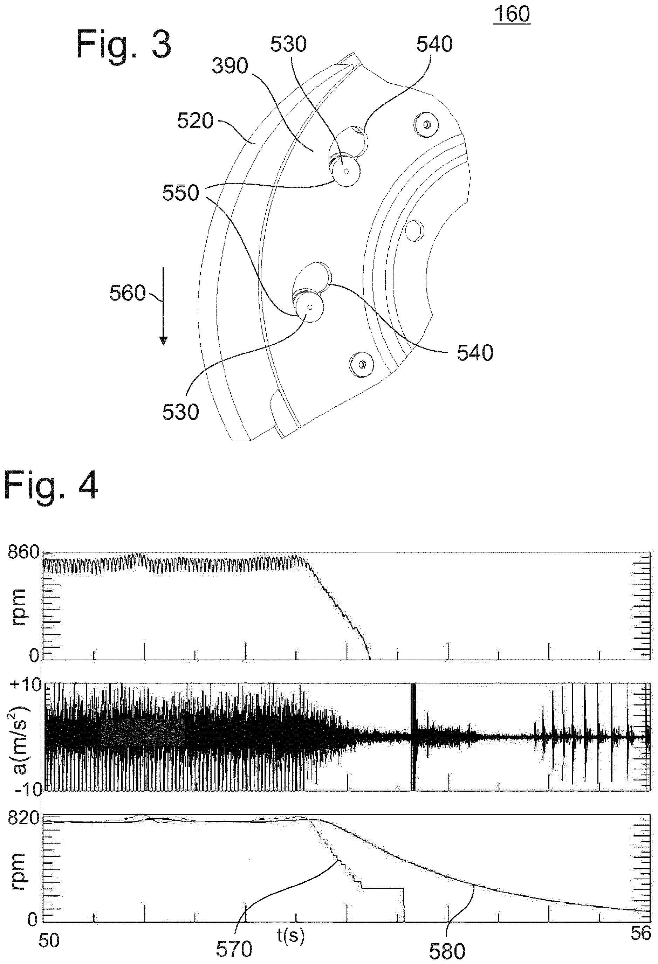

Fig. 3 zeigt eine perspektivische Darstellung der Tilgertorsionsdämpferanordnung 160. Diese weist im vorliegenden Ausführungsbeispiel mehr als eine Tilgermasse 520 auf, die über Wälzkörper 530 in Laufbahnen 540 der auch als Halterbleche bezeichneten ersten und zweiten Führungsbauteile geführt wird. Fig. 3 zeigt hierbei im Vordergrund das zweite Führungsbauteil 390.

Bei einem Fahrzeug mit einem automatischen Getriebe 180 (Automatikgetriebe) und einem hydrodynamischen Anfahrelement 230 in Form eines Drehmomentwandlers mit einer Tilgertorsionsdämpferanordnung 160, die auch als drehzahl-adaptiver Tilger bzw. drehzahl-adaptives Tilgersystem bezeichnet wird, ist häufig nach wenigen Sekunden, beispielsweise 1 bis 3 s nach einem Stoppen des Motors ein Klopfen zu hören, welches vom Fahrer häufig als störend oder sogar als Hinweis auf ein mögliches Vorliegen eines technischen Defekts gewertet wird (NVH-Problem).

Grund für dieses Klopfen ist bei vielen Tilgertorsionsdämpferanordnungen 160, dass die Tilgermassen 520 bei einem langsamen Ausdrehen der Getriebeeingangswelle 170 in Endanschläge 550 der Führungsbauteile 380, 390 gehen. Sie folgen hierbei einer in Fig. 3 durch einen Pfeil eingezeichneten Richtung der Schwerkraft 560, da aufgrund des langsamen Ausdrehens die Fliehkraft nicht mehr der Schwerkraft 560 entgegenwirken kann. Anders ausgedrückt folgen ab einer bestimmten Drehzahl die Tilgermassen 520 eher der Fliehkraft als der auf sie noch einwirkenden Fliehkraft. Um dies näher zu illustrieren, zeigt Fig. 4 eine zeitliche Gegenüberstellung verschiedener Messgrößen, welche im Rahmen des Antriebsstrangs 100 auftreten. Hierbei zeigen die Abszissen der drei Teildarstellungen der Fig. 4 jeweils einen Zeitabschnitt zwischen t = 50 s und t = 56 s.

Die oberste Teildarstellung der Fig. 4 illustriert hierbei einen Verlauf der Drehzahl der Ausgangswelle 140 des Antriebsmotors 110, wie sie an der elastischen Verbindungsstruktur 280, also der Primärseite des Anfahrelements 120 messbar ist. Zu einem Zeitpunkt von etwa 52,5 s bricht die bis dahin im Wesentlichen konstante Drehzahl ein und kommt nach etwa 53,2 s zum Erliegen. Hierbei weist die Motordrehzahl sowohl im konstanten Bereich wie auch während des Abfallens eine überlagerte hochfrequente Periode, die einer Periode von etwa 1500 bis 1600 1/min entspricht. Diese hochfrequente Oszillation wird durch die Zündfolge der Zylinder des Antriebsmotors 110 hervorgerufen.

Die mittlere Teildarstellung der Fig. 4 zeigt hierbei über dem gleichen Zeitabschnitt auftretende Beschleunigungen, also aufgetretene Vibrationen, die an einem Getriebelager gemessen werden. In der Zeit zwischen 50 s und 52,5 s, wenn also der Antriebsmotor 110 mit im Wesentlichen konstanter Drehzahl läuft, weisen auch die Vibrationen, als Beschleunigung a gemessen, eine im Wesentlichen konstante hochfrequente Schwingungsform auf, bei der Beschleunigungen a im Wesentlichen zwischen -10 m/s² und +10 m/s² auftreten. Mit dem Ausschalten bzw. Stoppen des Antriebsmotors 110 werden auch die Beschleunigungen, also die Vibrationen an dem Getriebelager geringer. Nach etwa 53,7 s tritt jedoch eine erneute deutliche Vibration auf, die für etwa 1 s bei jedoch deutlich reduzierter Amplitude anhält, bevor diese bei einem Zeitpunkt von etwa 54,8 s erneut in ein regelmäßiges Klopfen mit hohen Beschleunigungswerten übergehen.

Die unterste Teildarstellung der Fig. 4 zeigt so einen Motordrehzahlverlauf 570, der die Drehzahl der Ausgangswelle 140 der Antriebseinheit 110 widerspiegelt. Darüber hinaus zeigt diese Teilabbildung ferner einen Turbinendrehzahlverlauf 580, der einer Drehzahl der Eingangswelle 170 des Getriebes 180 entspricht. Beide Verläufe sind über den CAN-Signalbus (CAN = Controller Area Network) von den entsprechenden Steuergeräten abgreifbar.

Die deutliche Vibration bei etwa 53,7 s trifft hierbei zeitlich mit einem Zusammenbrechen des Drehzahlsignals des Drehzahlverlaufs 570 des Antriebsmotors 110 zusammen. Die regelmäßigen Klopfstrukturen, die bei etwa 54,8 s beginnen, sind hierbei eine Folge, dass aufgrund der zwar immer noch vorhandenen Drehung der Sekundärseite 150, also der Tilgertorsionsdämpferanordnung 160, wie dies im unteren Teil der Fig. 4 zu sehen ist, eine Bewegung der Tilgermassen 520 noch stattfindet, die dabei auf die Tilgermassen 520 einwirkenden Fliehkräfte jedoch nicht mehr ausreichen, die Schwerkraft 560 derart zu überwinden, dass die Tilgermassen 520 nicht mehr mit den Endanschlägen 550 in Kontakt treten. So schlagen die Tilgermassen 520 auf die Endanschläge 550 der Laufbahnen 540 auf und erzeugen dort die in der mittleren Teildarstellung der Fig. 4 gezeigten kammartigen Beschleunigungswerte, die gegebenenfalls mit einem hörbaren Klopfgeräusch einhergehen können.

Ein Ausführungsbeispiele eines Steuergeräts 200 und eines Antriebsstrangs 100 kann hierbei zur Lösung dieses Problems beitragen. Dieses basiert auf der Erkenntnis, dass es im vorliegenden Fall sinnvoll ist, die Getriebeeingangswelle 170 schneller zum Stillstand zu bringen, um so das mehrmalige Anschlagen der auch als Fliehgewichte bezeichneten Tilgermassen 520 zu verhindern. Hierdurch kann eine Verbesserung des zuvor beschriebenen NVH-Komforts erreichbar sein.

Anders ausgedrückt basiert das Ausführungsbeispiele darauf, dass, wenn beispielsweise das Bedienelement für die Fahrstufenauswahl, also der Wahlhebel des Getriebes 180, bei einem Stillstand des Fahrzeugs in die P-Stellung oder die N-Stellung gebracht wird, und der Zündschlüssel gedreht wird, um den Motor zu stoppen, die Überbrückungskupplung 240 (Wandlerkupplung) geschlossen wird. Je nach konkreter Implementierung kann es gegebenenfalls auch ausreichen, diese nicht vollständig zu schließen, sondern lediglich einen gezielten Schlupf zwischen der Primärseite 130 und der Sekundärseite 150 aufzuprägen, um die zuvor bezeichneten Zwischenmassen an die Primärmasse, also die Primärseite 130 zu koppeln. Hierdurch werden, da die Tilgertorsionsdämpferanordnung 160 Teil der Zwischenmasse ist bzw. an dieser montiert ist, und die Primärmasse die Motordrehzahl aufweist, auch die Tilgertorsionsdämpferanordnung 160 von der in Fig. 4 gezeigten Restturbinendrehzahl auf die des Motors abgebremst. Anders ausgedrückt kommt hierdurch die Getriebeeingangswelle 170 schneller zum Stillstand.

Eine Übertragung von Drehmoment über die Anfahrkupplung auf die Ausgangswelle 190 des Getriebes 180 wird hierbei schon dadurch verhindert, dass das Getriebe 180 sich in der P-Stellung oder in der N-Stellung befindet. Eine Kraftübertragung von dem Antriebsmotor 110 in das Getriebe 180, wenn die Überbrückungskupplung 240 als ein Beispiel eines Kupplungselements 210 geschlossen wird, ist aufgrund der restlichen Getriebekupplungen bzw. Stellelemente des Getriebes 180 in der P- bzw. N-Getriebestellung nicht gegeben. Diese Schaltelemente sind in den vorgenannten Stellungen im Allgemeinen häufig geöffnet.

Selbstverständlich kann alternativ zu der oben beschriebenen Verwendung der Überbrückungskupplung 240 auch jede andere Kupplung des Getriebes 180 bzw. jedes andere Schaltelement des Getriebes 180 bei einem Motorstopp geschlossen werden. Hierdurch kann es gegebenenfalls möglich sein, die Getriebeeingangswelle 170 schneller zum Stillstand zu bringen. Dies kann beispielsweise, wie dies bereits in Fig. 1 illustriert wurde, dadurch gestehen, dass ein entsprechendes Schaltelement 270 die Sekundärseite 150 mit der Tilgertorsionsdämpferanordnung 160 mit einer Welle 250 oder einem Teil des Gehäuses des Getriebes 180 derart in Reibkontakt bringt, sodass die Tilgertorsionsdämpferanordnung 160 und die mit ihr verbundener Sekundärseite 150 abgebremst werden. Ausführungsbeispiele können so eine Verbesserung des NVH-Komfortverhaltens während des Motorstopps bei Automatikgetrieben mit einem drehzahl-adaptiven Tilger und einem entsprechenden Drehmomentwandler ermöglichen.

Das Steuergerät 200 kann so mithilfe eines Ausführungsbeispiels eines Verfahrens zum Reduzieren einer Geräuschentwicklung in dem Antriebsstrang 100 des Fahrzeugs den eingangs erwähnten Kompromiss verbessern.

Fig. 5 zeigt ein Flussdiagramm eines solchen Ausführungsbeispiels eines Verfahrens zum Reduzieren einer Geräuschentwicklung in einem solchen Antriebsstrang 100 eines Fahrzeugs. Nach einem Start des Verfahrens in einem Schritt S100 wird zunächst in einem Schritt S110 das zuvor erwähnte Eingangssignal empfangen. Anschließend wird in einem Schritt S120 das Kupplungselement 210 derart angesteuert, sodass dieses die Sekundärseite 150 abbremst, wenn das Eingangssignal ein Abschalten des Antriebsmotors anzeigt. Das Verfahren endet dann in einem Schritt S130.

Durch den Einsatz des Ausführungsbeispiels kann es so möglich sein, einen Kompromiss zwischen Komfort, Ansprechverhalten sowie ökonomischer und ökologischer Aspekte des Antriebsstrangs zu verbessern.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern und so beispielsweise mittels Aktoren auch komplexere Verfahrensschritte durchführen.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichen

- 100: Antriebsstrang
- 110: Antriebsmotor
- 120: Anfahrelement
- 130: Primärseite
- 140: Ausgangswelle
- 150: Sekundärseite
- 160: Tilgertorsionsdämpferanordnung
- 170: Eingangswelle
- 180: Getriebe
- 190: Ausgangswelle
- 200: Steuergerät
- 210: Kupplungselement
- 220: Bezugsbauteil
- 230: Hydrodynamisches Anfahrelement
- 240: Überbrückungskupplung
- 250: Welle
- 260: Gehäuse
- 270: Schaltelement
- 280: Elastisches Verbindungselement
- 290: Gehäuse
- 300: Nietverbindung
- 310: Erste Gehäuseschale
- 320: Zweite Gehäuseschale
- 330: Pumpenschaufel
- 340: Drehachse
- 350: Turbinenschaufeln
- 360: Haltebauteil
- 370: Abtriebsnabe
- 375: Leitrad
- 380: Erstes Führungsbauteil
- 390: Zweites Führungsbauteil
- 400: Tilgermasse
- 410: Torsionsdämpfer
- 420: Federanordnung
- 430: Untere Nabenscheibe
- 440: Obere Nabenscheibe
- 450: Abdeckblech
- 460: Innenlamellenträger
- 470: Innenlamelle
- 480: Außenlamelle
- 490: Kolben
- 500: Trennwand
- 510: Lager
- 520: Tilgermasse
- 530: Wälzkörper
- 540: Laufbahn
- 550: Endanschlag
- 560: Schwerkraft
- 570: Motordrehzahlverlauf
- 580: Turbinendrehzahlverlauf

## Patentansprüche

1. Steuergerät (200) für einen Antriebsstrang (100) eines Fahrzeugs, beispielsweise eines Kraftfahrzeugs, der einen Antriebsmotor (110), ein Getriebe (180), ein Anfahrelement (120) und ein Kupplungselement (210) umfasst, wobei das Anfahrelement (120) eine Tilgertorsionsdämpferanordnung (160) mit wenigstens einer Tilgermasse (520) umfasst, wobei das Anfahrelement (120) mit einer Primärseite (130) mit dem Antriebsmotor (110) und mit einer Sekundärseite (150) mit der Tilgertorsionsdämpferanordnung (160) drehfest gekoppelt ist, und wobei das Kupplungselement (210) ausgebildet ist, um die Sekundärseite (150) durch ein Koppeln mit der Primärseite (130) des Anfahrelements (120) und/oder durch ein Koppeln mit einem bei einem Stillstand des Fahrzeugs stehenden Bezugsbauteil (220) abzubremsen, **dadurch gekennzeichnet, dass** das Steuergerät (200) ausgebildet ist, um das Kupplungselement (210) anzusteuern, sodass das Kupplungselement (210) die Sekundärseite (150) abbremst, wenn das Steuergerät (200) ein ein Abschalten des Antriebsmotors (110) anzeigendes Eingangssignal empfängt. und das Getriebe sich in der P-Stellung oder N-Stellung befindet.

2. Steuergerät (200) nach Anspruch 1, das für einen Antriebsstrang (100) ausgebildet ist, bei dem das Kupplungselement (210) ein hydrodynamisches Anfahrelement (230) umfasst, das ausgebildet ist, um eine Drehbewegung von der Primärseite (130) zu der Sekundärseite (150) zu übertragen, und bei der das Kupplungselement (210) eine Überbrückungskupplung (240) des hydrodynamischen Anfahrelements (230) umfasst, das ausgebildet ist, um die Primärseite (130) und die Sekundärseite (150) miteinander über eine reibschlüssige Verbindung oder einen Reibkontakt zu koppeln.

3. Steuergerät (200) nach einem der vorhergehenden Ansprüche, das für einen Antriebsstrang (100) ausgebildet ist, der ein automatisches Getriebe (180) umfasst, das über eine Getriebeeingangswelle (170) mit der Sekundärseite (150) gekoppelt ist und das Bezugsbauteil (220) umfasst, wobei das Kupplungselement (210) ein Schaltelement (270), beispielsweise eine Lamellenkupplung oder ein Bandbremse umfasst, das ausgebildet ist, um mit dem Bezugsbauteil (220), beispielsweise mit einer Welle des automatischen Getriebes (180) oder einem Teil eines Gehäuses (290) des automatischen Getriebes (180), eine reibschlüssige Verbindung oder einen Reibkontakt zu schaffen oder zu verstärken.

4. Steuergerät (200) nach einem der vorhergehenden Ansprüche, bei dem das Eingangssignal ein, beispielsweise von einem Fahrer des Fahrzeugs ausgelöstes, Ausschalten des Antriebsmotors (110) und/oder ein Absinken einer Drehzahl einer Welle des Antriebsstrangs (100), beispielsweise einer Ausgangswelle (190) des Antriebsmotors (110) oder einer Eingangswelle des Anfahrelements, unter eine vorbestimmte Grenzdrehzahl anzeigt, wobei die vorbestimmte Grenzdrehzahl höchstens 90 % einer Leerlaufdrehzahl des Antriebsmotors (110) entspricht.

5. Steuergerät (200) nach einem der vorhergehenden Ansprüche, das ferner ausgebildet ist, um die Sekundärseite (150) nur dann auf das Eingangssignal hin abzubremsen, wenn ferner eine weitere Bedingung erfüllt ist, beispielsweise wenn der Antriebsstrang (100) ein automatisches Getriebe (180) umfasst, wobei die weitere Bedingung beispielsweise dann erfüllt ist, wenn ein weiteres Eingangssignal eine eine antriebslose Einstellung des automatischen Getriebes (180) anzeigt.

6. Antriebsstrang (100) für ein Fahrzeug, beispielsweise ein Kraftfahrzeug, mit folgenden Merkmalen:
einem Antriebsmotor (110); einem Getriebe (180);
einem Anfahrelement (120), das eine Tilgertorsionsdämpferanordnung (160) mit wenigstens einer Tilgermasse (520) umfasst, wobei das Anfahrelement (120) mit einer Primärseite (130) mit dem Antriebsmotor (110) und mit einer Sekundärseite (150) mit der Tilgertorsionsdämpferanordnung (160) drehfest gekoppelt ist;
ein Kupplungselement (210), das ausgebildet ist, um die Sekundärseite (150) durch ein Koppeln mit der Primärseite (130) des Anfahrelements (120) und/oder durch ein Koppeln mit einem bei einem Stillstand des Fahrzeugs stehenden Bezugsbauteil (220) abzubremsen; und
ein Steuergerät (200) nach einem der vorhergehenden Ansprüche.

7. Verfahren zum Reduzieren einer Geräuschentwicklung in einem Antriebsstrang (100) eines Fahrzeugs, beispielsweise eines Kraftfahrzeugs, wobei der Antriebsstrang einen Antriebsmotor (110), ein Getriebe (180), ein Anfahrelement (120) und ein Kupplungselement (210) umfasst, wobei das Anfahrelement (120) eine Tilgertorsionsdämpferanordnung (160) mit wenigstens einer Tilgermasse (520) umfasst, wobei das Anfahrelement (120) mit einer Primärseite (130) mit dem Antriebsmotor (110) und mit einer Sekundärseite (150) mit der Tilgertorsionsdämpferanordnung (160) drehfest gekoppelt ist, und wobei das Kupplungselement (210) ausgebildet ist, um die Sekundärseite (150) durch ein Koppeln mit der Primärseite (130) des Anfahrelements (120) und/oder durch ein Koppeln mit einem bei einem Stillstand des Fahrzeugs stehenden Bezugsbauteil (20) abzubremsen, umfassend:
Empfangen (S110) eines Eingangssignals;
Ansteuern (S120) des Kupplungselements (120), sodass das Kupplungselement (120) die Sekundärseite (150) abbremst, wenn das Eingangssignal ein Abschalten des Antriebsmotors (110) anzeigt und das Getriebe sich in der P-Stellung oder N-Stellung befindet

## Claims

1. Control device (200) for a drive train (100) of a vehicle, for example a motor vehicle, which comprises a drive motor (110), a transmission (180), a start-up element (120) and a clutch element (210), wherein the start-up element (120) comprises a dynamic vibration absorber torsion damper arrangement (160) with at least one dynamic vibration absorber mass (520), wherein the start-up element (120) is coupled by a primary side (130) to the drive motor (110) and by a secondary side (150) to the dynamic vibration absorber torsion damper arrangement (160) in a rotationally fixed manner, and wherein the clutch element (210) is designed to brake the secondary side (150) by coupling to the primary side (130) of the start-up element (120) and/or by coupling to a reference component (220) which is stationary when the vehicle is at a standstill, **characterized in that** the control device (200) is designed to activate the clutch element (210) such that the clutch element (210) brakes the secondary side (150) if the control device (200) receives an input signal, indicating a switching-off of the drive motor (110), and the transmission is in the P position or N position.

2. Control device (200) according to Claim 1, which is designed for a drive train (100), in which the clutch element (210) comprises a hydrodynamic start-up element (230) which is designed to transmit a rotary movement from the primary side (130) to the secondary side (150), and in which the clutch element (210) comprises a bridging clutch (240) of the hydrodynamic start-up element (230) which is designed to couple the primary side (130) and the secondary side (150) to one another by means of a frictional connection or a frictional contact.

3. Control device (200) according to either of the preceding claims, which is designed for a drive train (100) which comprises an automatic transmission (180) which is coupled via a transmission input shaft (170) to the secondary side (150) and comprises the reference component (220), wherein the clutch element (210) comprises a shift element (270), for example a multidisc clutch or a belt brake, which is designed to create or to increase a frictional connection or a frictional contact with the reference component (220), for example with a shaft of the automatic transmission (180) or a part of a housing (290) of the automatic transmission (180).

4. Control device (200) according to one of the preceding claims, in which the input signal indicates a switching-off of the drive motor (110), initiated for example by a driver of the vehicle, and/or a reduction in a speed of a shaft of the drive train (100), for example of an output shaft (190) of the drive motor (110) or of an input shaft of the start-up element, below a predetermined limit speed, wherein the predetermined limit speed corresponds at most to 90% of an idle speed of the drive motor (110).

5. Control device (200) according to one of the preceding claims, which is further designed to brake the secondary side (150) in response to the input signal only when furthermore a further condition is met, for example when the drive train (100) comprises an automatic transmission (180), wherein the further condition is met for example when a further input signal indicates a driveless setting of the automatic transmission (180).

6. Drive train (100) for a vehicle, for example a motor vehicle, having the following features:
a drive motor (110);
a transmission (180);
a start-up element (120) which comprises a dynamic vibration absorber torsion damper arrangement (160) with at least one dynamic vibration absorber mass (520), wherein the start-up element (120) is coupled by a primary side (130) to the drive motor (110) and by a secondary side (150) to the dynamic vibration absorber torsion damper arrangement (160) in a rotationally fixed manner;
a clutch element (210) which is designed to brake the secondary side (150) by coupling to the primary side (130) of the start-up element (120) and/or by coupling to a reference component (220) which is stationary when the vehicle is at a standstill; and
a control device (200) according to one of the preceding claims.

7. Method for reducing noise generation in a drive train (100) of a vehicle, for example a motor vehicle, wherein the drive train comprises a drive motor (110), a transmission (180), a start-up element (120) and a clutch element (210), wherein the start-up element (120) comprises a dynamic vibration absorber torsion damper arrangement (160) with at least one dynamic vibration absorber mass (520), wherein the start-up element (120) is coupled by a primary side (130) to the drive motor (110) and by a secondary side (150) to the dynamic vibration absorber torsion damper arrangement (160) in a rotationally fixed manner, and wherein the clutch element (210) is designed to brake the secondary side (150) by coupling to the primary side (130) of the start-up element (120) and/or by coupling to a reference component (220) which is stationary when the vehicle is at a standstill, comprising:
receiving (S110) an input signal;
activating (S120) the clutch element (120) such that the clutch element (120) brakes the secondary side (150) when the input signal indicates a switching-off of the drive motor (110) and the transmission is in the P position or N position.

## Revendications

1. Appareil de commande (200) pour une chaîne cinématique (100) d'un véhicule, par exemple d'un véhicule automobile, qui comprend un moteur d'entraînement (110), une boîte de vitesses (180), un élément de démarrage (120) et un élément d'embrayage (210), dans lequel l'élément de démarrage (120) est un dispositif d'amortissement de torsions harmoniques (160) avec au moins une masse d'amortissement (520), dans lequel l'élément de démarrage (120) est couplé de façon calée en rotation par un côté primaire (130) au moteur d'entraînement (110) et par un côté secondaire (150) au dispositif d'amortissement de torsions harmoniques (160), et dans lequel l'élément d'embrayage (210) est configuré pour freiner le côté secondaire (150) par un couplage avec le côté primaire (130) de l'élément de démarrage (120) et/ou par un couplage avec un élément de référence (220) immobile lors de l'arrêt du véhicule, **caractérisé en ce que** l'appareil de commande (200) est configuré pour commander l'élément d'embrayage (210), de telle manière que l'élément d'embrayage (210) freine le côté secondaire (150), lorsque l'appareil de commande (200) reçoit un signal d'entrée indiquant un arrêt du moteur d'entraînement (110) et que la boîte de vitesses se trouve dans la position P ou dans la position N.

2. Appareil de commande (200) selon la revendication 1, qui est conçu pour une chaîne cinématique (100), dans lequel l'élément d'embrayage (210) comprend un élément de démarrage hydrodynamique (230), qui est configuré pour transmettre un mouvement de rotation du côté primaire (130) au côté secondaire (150), et dans lequel l'élément d'embrayage (210) comprend un embrayage de pontage (240) de l'élément de démarrage hydrodynamique (230), qui est configuré pour coupler le côté primaire (130) et le côté secondaire (150) l'un à l'autre par un assemblage à friction ou un contact à friction.

3. Appareil de commande (200) selon l'une quelconque des revendications précédentes, qui est conçu pour une chaîne cinématique (100) qui comprend une boîte de vitesses automatique (180), qui est couplée au côté secondaire (150) par un arbre d'entrée de boîte de vitesses (170) et qui comprend l'élément de référence (220), dans lequel l'élément d'embrayage (210) comprend un élément de commutation (270), par exemple un embrayage multidisque ou un frein à bande, qui est configuré pour procurer ou renforcer un assemblage à friction ou un contact à friction avec l'élément de référence (220), par exemple avec un arbre de la boîte de vitesses automatique (180) ou une partie du carter (290) de la boîte de vitesses automatique (180).

4. Appareil de commande (200) selon l'une quelconque des revendications précédentes, dans lequel le signal d'entrée affiche un arrêt du moteur d'entraînement (110), par exemple provoqué par un conducteur du véhicule, et/ou un abaissement d'un nombre de tours d'un arbre de la chaîne cinématique (100), par exemple d'un arbre de sortie (190) du moteur d'entraînement (110) ou d'un arbre d'entrée de l'élément de démarrage, en dessous d'un nombre de tours limite prédéterminé, dans lequel le nombre de tours limite prédéterminé correspond au maximum à 90 % d'un régime de ralenti du moteur d'entraînement (110).

5. Appareil de commande (200) selon l'une quelconque des revendications précédentes, qui est en outre conçu pour ne freiner le côté secondaire (150) en direction du signal d'entrée que lorsqu'une autre condition est en outre remplie, par exemple lorsque la chaîne cinématique (100) comprend une boîte de vitesses automatique (180), dans lequel l'autre condition est remplie par exemple lorsqu'un autre signal d'entrée affiche un réglage sans entraînement de la boîte de vitesses automatique (180).

6. Chaîne cinématique (100) pour un véhicule, par exemple un véhicule automobile, avec les caractéristiques suivantes:
un moteur d'entraînement (110); une boîte de vitesses (180) ;
un élément de démarrage (120), qui comprend un dispositif d'amortissement de torsions harmoniques (160) avec au moins une masse d'amortissement (520), dans laquelle l'élément de démarrage (120) est couplé de façon calée en rotation par un côté primaire (130) au moteur d'entraînement (110) et par un côté secondaire (150) au dispositif d'amortissement de torsions harmoniques (160);
un élément d'embrayage (210), qui est configuré pour freiner le côté secondaire (150) par un couplage avec le côté primaire (130) de l'élément de démarrage (120) et/ou par un couplage avec un élément de référence (220) immobile lors de l'arrêt du véhicule; et
un appareil de commande (200) selon l'une quelconque des revendications précédentes.

7. Procédé de réduction d'une production de bruit dans une chaîne cinématique (100) d'un véhicule, en particulier d'un véhicule automobile, dans lequel la chaîne cinématique comprend un moteur d'entraînement (110), une boîte de vitesses (180), un élément de démarrage (120) et un élément d'embrayage (210), dans lequel l'élément de démarrage (120) comprend un dispositif d'amortissement de torsions harmoniques (160) avec au moins une masse d'amortissement (520), dans lequel l'élément de démarrage (120) est couplé de façon calée en rotation par un côté primaire (130) au moteur d'entraînement (110) et par un côté secondaire (150) au dispositif d'amortissement de torsions harmoniques (160), et dans lequel l'élément d'embrayage (210) est configuré pour freiner le côté secondaire (150) par un couplage avec le côté primaire (130) de l'élément de démarrage (120) et/ou par un couplage avec un élément de référence (220) immobile lors d'un arrêt du véhicule, comprenant les opérations suivantes:
recevoir (S110) un signal d'entrée;
commander (S120) l'élément d'embrayage (120), de telle manière que l'élément d'embrayage (120) freine le côté secondaire (150), lorsque le signal d'entrée affiche un arrêt du moteur d'entraînement (110) et que la boîte de vitesses se trouve dans la position P ou dans la position N.
